# EUROPEAN PATENT SPECIFICATION

(11) **EP 0 670 475 B1**
(45) Date of publication and mention of the grant of the patent: **30.10.2002**
(21) Application number: 95500018.7
(22) Date of filing: 23.02.1995
(51) Int. Cl.: G01F 1/30, G01F 3/28

(54) **Method and apparatus for measuring dry particles flow rate**
Verfahren und Gerät zum Messen des Durchsatzes von trockenen Teilchen
Méthode et appareil pour mesurer le débit de particules sèches

(30) Priority: 01.03.1994 AR 32755094
(43) Date of publication of application: 06.09.1995
(73) Proprietor: Pollano, Humberto Eduardo, Cordoba (AR); Contti, Omar Eduardo, Cordoba (AR)
(72) Inventor: Pollano, Humberto Eduardo, Cordoba (AR); Contti, Omar Eduardo, Cordoba (AR)
(74) Representative: Elzaburu Marquez, Alberto

(56) References cited:
- US-A- 3 135 426

## Description

### FIELD OF THE INVENTION

The present invention relates to a method and apparatus for determining the weight flow rate of dry particles while falling, almost without interruption, from a high location, and its further addition in order to obtain the final weight, as in the preamble of claims 1 and 2 respectively.

### BACKGROUND OF THE INVENTION

From US-A-3 135 426 a method and apparatus are known for measuring the mass flow rate of dry particles, where the method comprises the steps of dropping particles onto a rotary member having a substantially horizontal rotary axis, thereby causing rotation of the member about said axis, retarding the rotation of the member by applying a countervailing torque proportional to the angular speed of the member, such that the member rotates at a constant speed as long as the mass flow rate of the particles is constant, measuring the angular speed of the member and deriving the flow rate from said measured speed. On the other hand, the apparatus comprises a rotary member having a substantially horizontal rotary axis, said member being adapted to be set into rotation by dry particles dropped onto said member, an eddy current brake for providing a countervailing torque proportional to the angular speed of the member, an opto-electronical sensor for measuring angular speed of the member, and means for determining a value of the mass flow rate from said speed and for displaying said value.

### SUMMARY OF THE INVENTION

The method and steps thereof are based on a practical and economical need in those places lacking platform scales (since they are fixed and expensive) or, where continuous measurement of the weight flow rate of dry particles is required, without accumulating the material into bins or hoppers.

The apparatus is specially adapted for weighing grain such as wheat, soy, corn, etc., thus solving a concern of agricultural producers by means of the use of the present method and apparatus, which allows the "in situ" weighing of the produced grain at a very low cost without requiring expensive storage facilities.

The essential features of the method and apparatus of the invention are as described in the characterizing portion of claims 1 and 2 respectively. The characterizing features lead to an improved measurement accuracy. Preferred embodiments of said apparatus are shown in dependent claims 3 and 4.
Operation: Classic physics explains the operation. The second Newton Law applied to rotating bodies states that: "The sum of torques on an axis is equal to the product between the inertia momentum of the rotating body and its angular acceleration". Therefore, whenever a torque is applied to a rotating body, the latter rotates with variable angular speed, proportional to said torque. In other words, if the resulting momentum is zero, the angular acceleration is also zero, and the movable body maintains constant its angular speed.

The measuring method and the apparatus of the invention are based on the above principle. On one side, the driving torque caused by the dry particles falling on the vanes of the rotating wheel exists. If an antagonist torque directly proportional to the angular speed of the wheel is applied, a speed develops such that both torques are equal and, since they are of different sign, the resulting force is zero; therefore, at this point, the angular speed is constant as explained above. Further, it is to be noted that in any practical system, there is a third torque, that caused by friction. This fact is taken into account by an electronic calculation system in order to compensate its influence.

Since the rotating speed of the wheel is a function of the driving torque, and this, in turn, depends on the instantaneous weight flow rate of the dry particles falling on the vanes, by measuring the instantaneous angular speed, the value of the weight flow rate of dry particles passing through the wheel at that moment may be obtained.

The antagonist momentum proportional to the angular speed is attained by means of an eddy current electromagnetic brake.

The subsystem for angular speed measuring, calculation and totalization of the weight flow rate and display of results is comprised by a circuit the main element of which is a high scale integration electronic microcomputer.

The physical-mathematical development supporting the above follows:

Applying the second Newton Law to rotations$\text{ΣCi = Ixα}$ wherein Ci represents the different actuating torques; I the inertia momentum of the movable element and α the angular acceleration. Cₘ being the driving torque caused by the grain falling; Cᵣ that produced by friction on bearings, and C_{f} the braking torque produced by eddy currents, in this particular case,${\text{C}}_{\text{m}} {\text{- C}}_{\text{r}} {\text{- C}}_{\text{f}} \text{= I x α}$

If ω is the angular speed, thus $\text{ω = cte. ⇒ α =} \frac{\text{dω}}{\text{dt}} \text{= O.-}$then,${\text{C}}_{\text{m}} {\text{- C}}_{\text{r}} {\text{= C}}_{\text{f}}$

Therefore, since the antagonist torque provided by the eddy current brake is C_{f} = K_{f} x ω, K_{f} being the proportionality constant depending on the element dimensions and magnetic induction of its magnets; the friction torque may be considered independent from the rotating speed for these rates; and due to the vane turbine and wheel theory, it may be considered with sufficient approximation, that${\text{C}}_{\text{m}} \text{=} \frac{{\text{Q}}_{\text{P}}}{\text{g}} {\text{. (v}}_{\text{te}} {\text{- v}}_{\text{ts}} \text{) . r}$ wherein Qₚ is the dry particles weight flow rate, g is the gravity acceleration, vₜₑ is the inlet tangent speed, vₜₛ the outlet tangent speed and r is the wheel effective radius; therefore$\frac{{\text{Q}}_{\text{P}}}{\text{g}} {\text{. (v}}_{\text{te}} {\text{- v}}_{\text{ts}} {\text{) . r - C}}_{\text{r}} {\text{= K}}_{\text{f}} \text{. ω}$ through mathematical calculation, and taking into account that vₜₛ = ω.r$\frac{{\text{Q}}_{\text{P}}}{\text{g}} {\text{. v}}_{\text{te}} \text{. r -} \frac{{\text{Q}}_{\text{P}}}{\text{g}} {\text{. ω.r}}^{\text{2}} {\text{- K}}_{\text{f}} {\text{. ω - C}}_{\text{r}} \text{= 0}$$\text{ω =} \frac{\frac{{\text{Q}}_{\text{P}}}{\text{g}} {\text{.V}}_{\text{te}} {\text{. r - C}}_{\text{r}}}{\frac{{\text{Q}}_{\text{P}}}{\text{g}} {\text{. r}}^{\text{2}} {\text{+ K}}_{\text{f}}}$ it is concluded that ω = f(Qₚ).

Therefore, measuring the instantaneous angular speed of the wheel (this measure being obtained readily), the value corresponding to the. weight flow rate of dry particles falling at that moment may be computed, with the aid of a computer and, by means of a simple integration, the total weight of dry particles passing through the vane wheel may be also calculated.

Since the braking constant K_{f} depends, among other parameters, on the resistivity of the disk material used in its construction, and this, in turn, varies as a function of the disk temperature (which is determined by room temperature as well as the heat created by operation), according to the precision level desired, an electronic temperature measuring system for measuring disk temperature and an automatic temperature compensation in calculations of the weight flow rate carried out by the micro-controller are included.

The device described is one of the embodiments in which this process may be used, as shown in the attached drawings.

The apparatus or equipment comprises four basic sub-systems:
1. Dry particles channelizing sub-system.
2. Vane wheel rotating under dry particles falling influence.
3. Braking system proportional to the angular speed attained by the vane wheel.
4. Electronic system for reading parameters, calculation and display of the result.

### BRIEF DESCRIPTION OF THE DRAWINGS

Figure 1 is a front view of the measurement equipment, showing its simple and robust construction.
Figure 2 is a section of the device taken along line A-A of figure 1.
Figure 3 is a schematic view of one of the embodiments of the eddy current brake, which has been used due to its ready construction and adjustment.
Figure 4 is a block diagram of the electronic system, with completely standard components and easily available in the market.
Fig. 5 is a software flow diagram to be recorded in the "micro-controller chip", which controls all operations of the device.

In the drawings, the same reference letters correspond to the same constituting elements.

### DETAILED DESCRIPTION OF THE INVENTION

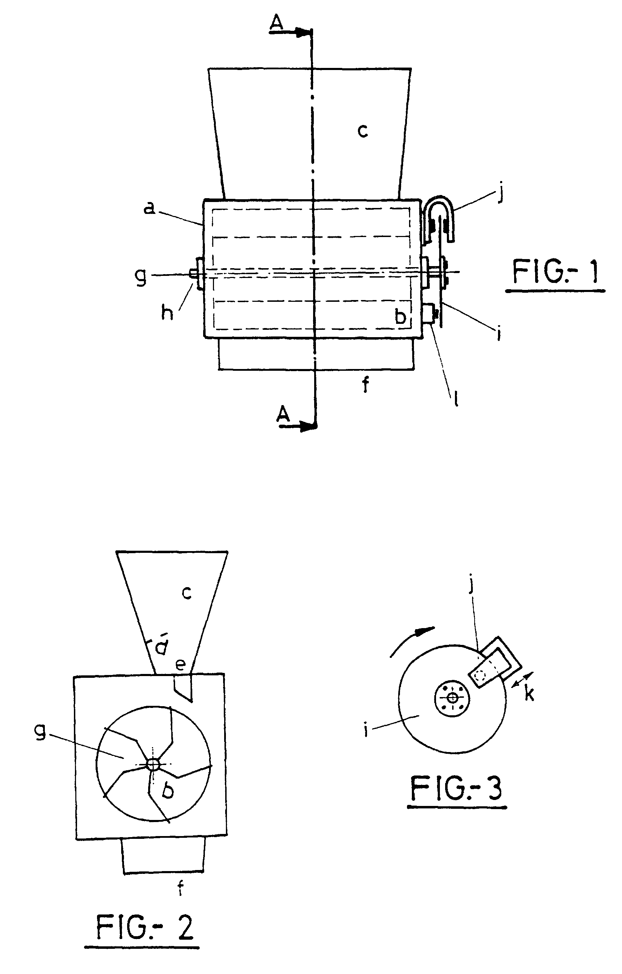

As may be seen in figure 1, the equipment is constituted by a housing -a- containing the vane wheel -b-, such wheel rotating under the power provided by dry particles falling, the dry particles being channelized thereto through the bin -c-, the spreader -d- and a "levelling" hole -e-. Once on the vane, dry particles transfer power to the apparatus and fall freely through the outlet bore -f-. At one end of the single shaft -g-, fixed to the housing by tight ball bearings -h- there is a copper disk -i-, rotating solidary to said shaft, and is crossed at the edge by the magnetic field provided by permanent magnets -j- used for causing the antagonist torque proportional to rotation, due to the interaction between currents induced in the disk and the inductor magnetic field, called "eddy current brake", shown in a greater detail in figure 3, wherein the movement calibrating the radial distance of magnets (indicated by the double arrow -k-) may be seen, which allows initial adjustment of the braking constant value.

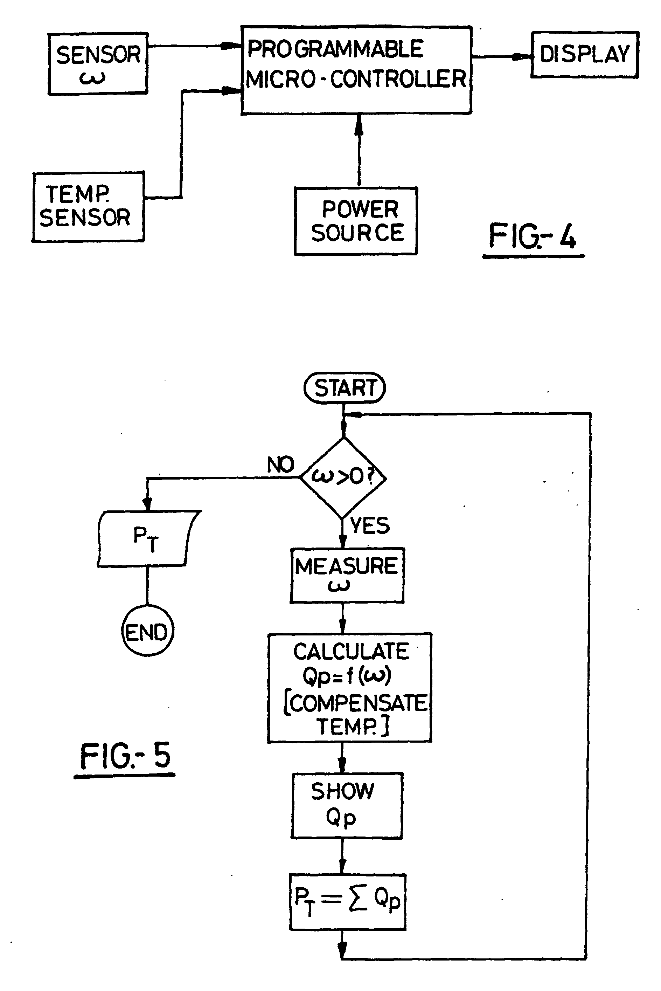

The disk is also used for providing the angular speed signal, taken by an optical or magnetic sensor -1-acting as generator of angular steps, such signal being sent to the electronic microcomputer which processes the signal for obtaining the flow rate value, the final weight value, or both (after temperature compensation), and showing the results on a digital display. Figure 4 shows the block diagram of this part of the apparatus and figure 5 shows the flow diagram corresponding to the software to be followed by the micro-controller, which is recorded in its non-volatile memory, once the apparatus is started up.

According to figure 5, after Qₚ is calculated, a necessary temperature compensation is carried out and the value of Qₚ shown, a cumulative summation of all values of Qₚ being then made to obtain P_{T} = ΣQₚ, where P_{T} means the total weight of dry particles as determined in each successive measuring period.

The function allowing the dry particle weight flow rate to be derived is obtained through practical tests, this providing a proper adaptation to mechanical and electronic tolerances, inherent of any actual system.

## Claims

1. A method for measuring at least one of weight flow rate and total weight of dry particles, comprising the steps of:
providing said dry particles in a substantially vertical flow;
positioning a rotating member (b) in said substantially vertical flow, said member being mounted for rotation around a substantially horizontal axis (g) so as to cause rotation of said rotating member (b) in one direction;
applying by means of an eddy current electromagnetic brake (i,j) a braking force to said rotating member (b) against said rotation in said one direction, said electromagnetic brake comprising a disk (i) mounted for rotation with said rotating member (b), and means (j) for generating a magnetic field in said disk (i) to apply said braking force; and
measuring the speed of rotation of said rotating member (b) caused by said substantially vertical flow of dry particles and said braking force against said rotation;
**characterized by** further comprising the steps of:
measuring the disk temperature of the eddy current electromagnetic brake (i,j) applying said braking force against said rotation in one direction;
using said measured temperature values for a temperature compensation; and
determining said at least one weight flow rate and total weight of said dry particle flow from said speed of rotation of said rotating member (b) taking into account said temperature compensation and displaying the so determined value(s).

2. An apparatus for measuring at least one of weight flow rate and total weight of dry particles comprising:
means (c, d, e) for channeling dry particles in a substantially vertical flow;
a rotating member (b) mounted for rotation around a substantially horizontal axis (g) and positioned relative to said means for channeling (c, d, e) so that said substantially vertical flow causes rotation of said rotating member (b) around said substantially horizontal axis (g) in one direction;
an eddy current electromagnetic brake (i,j) for applying a braking force to said rotating member (b) against the rotation in said one direction, said electromagnetic brake comprising a disk (i) mounted for rotation with said rotating member (b), and means (j) for generating a magnetic field in said disk (i) to apply said braking force; and
meant (L) for measuring the speed of rotation of said rotating member (b) caused by said substantially vertical flow of dry particles and said braking force against said rotation;
**characterized by** further comprising:
a temperature sensing device for measuring the disk temperature of said electromagnetic brake (i,j), the measured temperature values being used for a temperature compensation; and
means for determining said at least one weight flow rate and total weight of said dry particle flow from said speed of rotation of said rotating member (b) taking into account said temperature compensation and for displaying the so determined value(s).

3. The apparatus according to claim 2, **characterized in that** said rotating member (b) comprises a vane wheel (b) having a plurality of radially extending vanes.

4. The apparatus according to claim 2, **characterized in that** said rotating member (b) is positioned such that said substantially vertical flow impacts said rotating member (b) substantially entirely to one side of said axis (g).

## Patentansprüche

1. Ein Verfahren zur Messung von zumindest einer gewichteten Durchflussmenge und Gesamtgewichtes der trockenen Partikel, die folgende Schritte umfasst:
die besagten trockenen Partikel mit einem praktisch vertikalen Fluss zu versehen;
Anordnung eines Drehelementes (b) im besagten praktisch vertikalen Fluss, wobei besagtes Element angebracht wird, damit es um eine praktisch horizontale Achse dreht und die Drehung des besagten Drehelementes (b) in eine einzige Richtung erfolgt;
Beaufschlagung einer elektromagnetischen Bremse mit parasitärem Strom (i, j) durch eine Bremskraft auf besagtem Drehelement (b), die entgegen besagter Drehung in eine einzige Richtung gerichtet ist, wobei besagte elektromagnetische Bremse eine Scheibe (i), die zur Drehung mit besagtem Drehelement (b) vorgesehen ist und ein Mittel (j) besitzt, um auf besager Scheibe (i) ein magnetisches Feld zur Beaufschlagung der besagten Bremskraft hervorzurufen; und
Messung der Drehgeschwindigkeit des besagten Drehelementes (b), die durch besagten praktisch horizontal verlaufenden Fluss der trockenen Partikel und durch besagte, gegen die Drehung gerichtete Bremskraft, hervorgerufen wird;
**dadurch gekennzeichnet, dass** sie ausserdem die folgenden Schritt umfasst:
Messung der Scheibentemperatur der elektromagnetischen Bremse mit parasitärem Strom (i, j) unter Beaufschlagung der besagten Bremskraft, die gegen besagte Drehung in eine einzige Richtung gerichtet ist;
Verwendung der besagten, gemessenen Temperaturwerte für einen Temperaturausgleich; und
Bestimmung der zumindest erwähnten gewichteten Durchflussmengenrate und Gesamtgewichtes des besagten trockenen Partikelflusses der besagten Drehgeschwindigkeit des besagten Drehelementes (b) und Vorlage des(r) so ermittelten Wertes(e).

2. Ein Gerät zur Messung von zumindest einer gewichteten Durchflussmengenrate und des Gesamtgewichtes der trockenen Partikel, das umfasst:
Mittel (c, d, e) zur Führung der trockenen Partikel in einem praktisch vertikalen Fluss;
ein eingebautes Drehelement (b), das sich um eine praktisch horizontale Achse (g) dreht und das derart zu besagten Medien, die der Führung (c, d, e) dienen, angeordnet ist, dass besagter, praktisch vertikal verlaufende Fluss, die Drehung des besagten Drehelementes (b) um die praktisch horizontale Achse (g) bewirkt;
eine elektromagnetische Bremse mit parasitärem Strom (i, j) zur Beaufschlagung einer Bremskraft auf besagtes Drehelement (b), die entgegen der Drehung der besagten einzigen Richtung gerichtet ist, wobei besagte elektromagnetische Bremse eine Scheibe (i) die zur Drehung mit besagtem Drehelement (b) vorgesehen ist und ein Mittel (j) besitzt, um auf besager Scheibe (i) ein magnetisches Feld zur Beaufschlagung der besagten Bremskraft hervorzurufen, und
ein Mittel (L) zur Messung der Drehgeschwindigkeit des besagten Drehelementes (b), die durch besagten praktisch vertikalen Fluss der trockenen Partikel und besagter Bremskraft, die der besagten Drehung entgegengerichtet ist, verursacht wurde;
**dadurch gekennzeichnet, dass** es ausserdem umfasst:
einen Temperatursensor zur Messung der Scheibentemperatur der besagten elektromagnetischen Bremse (i, j), wobei die Werte der gemessenen Temperatur zum Temperaturausgleich verwendet werden; und
ein Mittel zur Bestimmung von zumindest der besagten gewichteten Durchflussmengenrate und Gesamtgewichtes des besagten Flusses der trockenen Partikel mit besagter Drehgeschwindigkeit des besagten Drehelementes (b), unter Berücksichtigung des besagten Temperaturausgleiches, sowie zur Vorlage des(r) Wertes(e), der(die) in dieser Form ermittelt wurde(n).

3. Gerät, nach dem Patentanspruch 2, **dadurch gekennzeichnet, dass** besagtes Drehelement (b) einen Turbinenrotor (b) umfasst, der eine Mehrzahl von sich radial erstreckenden Leitschaufeln aufweist.

4. Gerät nach dem Patentanspruch 2 , **dadurch gekennzeichnet, dass** besagtes Drehelement (b) in der Form angeordnet ist, dass der praktisch vertikal verlaufende Fluss auf besagtes Drehelement (b) praktisch komplett auf einer Seite der Achse (g) eingreift.

## Revendications

1. Un procédé pour la mesure d'au moins un du débit pondéré et du poids total de particules sèches comprenant les phases suivantes :
la fourniture desdites particules sèches à un flux pratiquement vertical ;
le positionnement d'un membre giratoire (b) dans ledit flux pratiquement vertical, ledit membre étant monté pour tourner autour d'un axe pratiquement horizontal (g) pour produire la rotation dudit membre giratoire (b) dans un seul sens ;
l'application d'un frein électromagnétique de courant parasite (i, j) au moyen d'une force de freinage sur ledit membre giratoire (b) opposé à ladite rotation dans un seul sens, ledit frein électromagnétique comprenant un disque (i) monté pour tourner avec ledit disque giratoire (b) et le moyen (j) pour créer un champ magnétique sur ledit disque (i) pour appliquer ladite force de freinage et
la mesure de la vitesse de rotation dudit membre giratoire (b) produite par ledit flux pratiquement horizontal de particules sèches et par ladite force de freinage opposée à ladite rotation ;
**caractérisé par le fait qu'**il comprend de plus les phases suivantes :
la mesure de la température du disque du frein électromagnétique à courant parasite (i, j) en appliquant ladite force de freinage opposée à ladite rotation à sens unique ;
l'utilisation desdites valeurs de température mesurées pour une compensation de température et
la détermination, au moins, dudit débit pondéré et du poids total dudit flux de particules sèches de ladite vitesse de rotation dudit membre giratoire (b) et de la présentation de la(des) valeur(s) ainsi déterminée(s).

2. Un appareil pour la mesure d'au moins un débit pondéré et un poids total de particules sèches comprenant :
des moyens (c, d, e) pour la canalisation de particules sèches dans un flux pratiquement vertical ;
un membre giratoire (b) monté pour tourner autour d'un axe pratiquement horizontal (g) et positionné par rapport auxdits moyens pour canaliser (c, d, e), de sorte que ledit flux pratiquement vertical produise la rotation dudit membre giratoire (b) autour d'un axe un (g) pratiquement horizontal ;
un frein électromagnétique à courant parasite (i, j) pour l'application d'une force de freinage audit membre giratoire (b) opposée à la rotation dans ledit sens unique, ledit frein électromagnétique comprenant un disque (i) monté pour tourner avec ledit membre giratoire (b) et le moyen (j) pour créer un champ magnétique sur ledit disque (i) pour appliquer ladite force de freinage ; et
un moyen (L) pour la mesure de la vitesse de rotation dudit membre giratoire (b) produite par ledit flux pratiquement vertical de particules sèches et par ladite force de freinage opposée à ladite rotation ;
**caractérisé par le fait qu'**il comprend de plus :
un dispositif senseur de température pour la mesure de la température du disque dudit frein électromagnétique (i, j), en utilisant les valeurs de la température mesurée pour une compensation de température et
un moyen pour la détermination, au moins, dudit taux de flux pondéré et du poids total dudit flux de particules sèches de ladite vitesse de rotation dudit membre giratoire (b), en tenant compte de ladite compensation de température et pour la présentation de la (des) valeur(s) ainsi déterminée(s).

3. L'appareil d'après la revendication 2, **caractérisé par le fait que** ledit membre giratoire (b) comprend un rotor de turbine (b) ayant plusieurs aubes qui s'étendent en rayon.

4. L'appareil d'après la revendication 2 **caractérisé par le fait que** ledit membre giratoire (b) est positionné de sorte que ledit flux pratiquement vertical a une influence complète sur ledit membre giratoire (b) pratiquement d'un côté dudit axe (g).
